(19) Europäisches Patentamt / European Patent Office / Office européen des brevets

(11) **EP 1 866 056 B1**

(12) **EUROPEAN PATENT SPECIFICATION**

(45) Date of publication and mention
of the grant of the patent:
**23.04.2014 Bulletin 2014/17**

(51) Int Cl.:
**B01D 53/047** *(2006.01)*  **C10G 45/02** *(2006.01)*
**C10G 45/58** *(2006.01)*  **C10G 47/00** *(2006.01)*

(21) Application number: **06719237.7**

(22) Date of filing: **23.01.2006**

(86) International application number:
**PCT/US2006/002293**

(87) International publication number:
**WO 2006/079025 (27.07.2006 Gazette 2006/30)**

(54) **MANAGEMENT OF HYDROGEN IN HYDROGEN-CONTAINING STREAMS FROM HYDROGEN SOURCES**

WASSERSTOFFVERWALTUNG IN WASSERSTOFFHALTIGEN STRÖMEN AUS WASSERSTOFFQUELLEN

GESTION DE L'HYDROGENE DANS DES FLUX CONTENANT DE L'HYDROGENE PROVENANT DE SOURCES D'HYDROGENE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.01.2005 US 645713 P**
**21.12.2005 US 752721 P**

(43) Date of publication of application:
**19.12.2007 Bulletin 2007/51**

(73) Proprietor: **ExxonMobil Research and Engineering Company**
**Annandale, NJ 08801-0900 (US)**

(72) Inventors:
• **KAUL, Bal, K.**
**Fairfax, VA 22033 (US)**
• **VIETS, John, W.**
**Fairfax, VA 22031 (US)**
• **HARANDI, Mohsen N.**
**Leesburg, VA 20176 (US)**
• **WOLFENBARGER, Julian, A.**
**Friendswood, Texas 77546 (US)**
• **STERN, David, L.**
**Asbury, NJ 08802 (US)**
• **OU, John, Di-Yi**
**Houston, TX 77059 (US)**

(74) Representative: **Plasman, Valérie M.L. et al**
**ExxonMobil Chemical Europe Inc.**
**IP Law Europe**
**Hermeslaan 2**
**1831 Machelen (BE)**

(56) References cited:
**EP-A- 1 004 343    WO-A-03/068366**
**US-A- 6 063 161    US-A1- 2004 255 778**
**US-B1- 6 361 583    US-B1- 6 451 095**

**Description**

## FIELD OF THE INVENTION

This invention relates to an improved hydrotreating process, where the hydrogen is recovered in a rapid cycle pressure swing adsorption having a cycle time of less than one minute for managing hydrogen in hydrogen-containing steams, from a hydrogen source, such as a stream reforming unit.

## BACKGROUND OF THE INVENTION

Hydroprocessing processes are used by petroleum refiners to improve the properties and hence value of many refinery streams. Such hydroprocessing units include hydrotreating, hydrocracking, hydroisomerization and hydrogenation process units. Hydroprocessing is generally accomplished by contacting a hydrocarbon feedstock in a hydroprocessing reaction vessel, or zone, with a suitable hydroprocessing catalyst under hydroprocessing conditions of elevated temperature and pressure in the presence of a hydrogen-containing treat gas to yield an upgraded product having the desired product properties, such as sulfur and nitrogen levels, boiling point, aromatic concentration, pour point and viscosity index. The operating conditions and the hydroprocessing catalysts used will influence the quality of the resulting hydroprocessing products.

All of these hydroprocessing operations require the use of hydrogen, and the amount of hydrogen required to operate these hydroprocessing units has greatly increased for several reasons. Regulatory pressure in the United States, Europe, Asia, and elsewhere has resulted in a trend to increasingly severe and/or selective hydroprocessing processes to form hydrocarbon products having very low levels of sulfur and other tailored properties, such as reduced aromatics levels, and improved pour point and viscosity index. The move to process heavier crude oils and the reduced market for fuel oil is increasing the need for hydrocracking, again leading to a higher hydrogen demand. As the qualities of lubricating oils improve, the need to remove even more sulfur, reduce aromatics levels, and improve pour point and viscosity index have increased the need for hydroprocessing. Further, many refineries receive large amounts of hydrogen as a by-product of catalytic reforming on their site. However, current treads to reduce aromatics in gasoline are constraining the use of catalytic reforming and thus removing a source of hydrogen. Thus, there is an ever growing need for improved hydrogen management associated with the various process units.

Since hydrogen is an important and valuable commodity in the various hydroprocessing units, it would be beneficial if the concentration of hydrogen in hydrogen-containing streams from hydrogen sources can be increased by removing at least a portion of the other components of the hydrogen-containing stream. Hydrogen generating units in a refinery are the steam methane reforming unit, the semiregenerative and continuous regeneration catalytic reformers, and residue gasification. Hydrogen is also produced in the refinery and petrochemical plant in the ethylene cracker, the FCC (Fluidized Catalytic Cracker), and thermal cracking. The relative production data for these sources of hydrogen are set forth in the table below.

Table 1

| Process | Wt % on feed | SCF/bbl | Wt % on crude |
|---|---|---|---|
| Continuous regeneration reformer | 3.5 | 1600 | 0.35-0.60 |
| Semiregenerative reformer | 1.4-2.0 | 600 - 900 | 0.15-0.30 |
| Residue gasification | 20-25 | 12,000-16,000 | 1-5 |
| Catalytic cracking | 0.05-0.10 | 30-60 | 0.01-0.04 |
| Thermal cracking | 0.03 | 20 | 0.01 |
| Ethylene cracker | 0.5-1.2 | -- | -- |
| Steam (methane) reformer | 30 | 12,000 | -- |
| Data taken from J. D. Fleshman, "FW Hydrogen Production," in "Handbook of Petroleum Refining Processes," 3rd edition, 2004, R. A. Myers editor, McGraw Hill. | | | |

Processes for recovering the hydrogen from these hydrogen generation units must match the hydrogen volumes and purities required. A conventional pressure swing adsorption device is typically utilized to recover hydrogen from a steam methane reforming unit or a residua gasification unit, while catalytic reformers typically utilize a separator to remove hydrocarbon condensate from the hydrogen produced. The hydrogen produced in cracking, including thermal, catalytic (i.e., FCC), and ethylene cracking, is not typically recovered due to poor economics. However, it may be advantageous to recover the hydrogen so as to debottleneck the distillative recovery section employed downstream of cracking units for the recovery of light ends, typically referred to as the "wet gas" ($C_4$-) or "dry gas" ($C_2$-) recovery trains.

US 6,361,583 discloses a process for separating hydrogen from a feed stream of mixed gases using a separation membrane comprising a polymer having repeat units of a fluorinated cyclic structure.

Although there are various processes commercially practiced for recovering hydrogen from these hydrogen generation units, there remains a need in the art for improved technologies to increase the concentration of hydrogen in the various hydrogen-containing treat gas streams used or generated in refining processes.

## SUMMARY OF THE INVENTION

A process wherein the concentration of hydrogen is increased in a hydrogen-containing stream obtained from a hydrogen source and the hydrogen is utilized in a petroleum refinery or petrochemical plant, which hydrogen-containing stream contains gaseous components other than hydrogen, which process comprises removing at least a portion of the gaseous components other than hydrogen from said hydrogen-containing stream in a rapid cycle pressure swing adsorption unit containing a plurality of adsorbent beds and having a total cycle time, $t_{TOT}$, of less than 10 seconds and a pressure drop within each adsorbent bed of greater than 4,086 kPa per metre of bed length (5 inches of water per foot of bed length), wherein the method also includes the step of utilizing said hydrogen in a petroleum refinery or petrochemical plant and the total cycle time, $t_{TOT}$, to separate the hydrogen-containing stream into a product gas and a tail gas is given by

$$t_{TOT} = t_f + t_{CO} + t_{CN} + t_P + t_{RP};$$

where

$t_f$ = a time period for conducting the hydrogen containing stream into an adsorbent bed which absorbs gaseous compounds other than hydrogen, and passing hydrogen out of the bed;
$t_{CO}$ = a co-current depressurization time;
$t_{CN}$ = a counter-current depressurization time;
$t_P$ = a purge time; and
$t_{RP}$ = a repressurization time

and where the tail gas pressure is greater than or equal to 515 kPa (60 psig) and wherein when the feed purity ratio P%/F% is greater than 1.1 the rate of recovery R% is greater than 80%, and when the feed purity ratio P%/F% is 1.1 or less the rate of recovery R% is greater than 90%, where P% is the purity of the hydrogen product gas in mol%, F% is the mol percentage of the feed gas which is hydrogen, and R% is the ratio of the amount of hydrogen retained in the product to the amount of hydrogen available in the feed.

DELETED.

In still another preferred embodiment the total cycle time is less than about 10 seconds and the pressure drop is greater than about 8,172 kPa per metre of bed length (10 inches of water per foot of bed length) for the rapid cycle pressure swing adsorption step.

## DETAILED DESCRIPTION OF THE INVENTION

The present invention can be practiced on any hydrogen-containing stream obtained from any hydrogen source. The hydrogen source can be a process unit that generates hydrogen as a main product stream or as a side stream. Non-limiting process units that generate hydrogen include steam reformers of methane and light hydrocarbons, residua gasification units, partial oxidation units for light hydrocarbons (POX reactors), catalytic reformers, ethylene crackers, fluid catalytic cracking units, and thermal cracking processes. It is within the scope of this invention that hydrogen-containing streams from other hydrogen generating sources can also be treated in accordance with this invention. Non-limiting examples of such other hydrogen generating sources include: partial oxidation (POX) or reformation of other carbon-based fuels, coal gasification, biomass gasification, pyrolysis, the dissociation of methanol or ammonia, the electrolysis of water, biological photosynthesis and fermentation units, hydrogen bromide electrolysis, photoelectrolysis, and reversible fuel cell technology. This invention is also applicable to hydrogen sources that recover hydrogen from various hydrogen-containing streams, but do not necessarily generate hydrogen. Non-limiting examples of such hydrogen recovery sources include membrane units, cryogenic units and conventional pressure swing adsorption units. The resulting hydrogen-containing product stream from such hydrogen sources is passed to a rapid cycle pressure swing adsorption unit, having cycle times of less than 10 seconds, and preferably less than about 5 seconds.

Steam reforming involves the conversion of methane (and other hydrocarbons in natural gas) into hydrogen and carbon monoxide by reaction with steam over a suitable catalyst, preferably a nickel-based catalyst. Steam reforming generally involves the following steps, as illustrated for methane conversion:

a. Reforming involves methane reacting with steam at elevated temperatures, preferably from about 850°C to about 900°C (1560°F - 1740°F) to produce a synthesis gas (syngas), a mixture primarily made up of hydrogen and carbon monoxide;

$$CH_4 + H_2O -----> CO + 3H_2$$

b. Shift Reaction, typically referred to as a water gas shift (WGS) reaction wherein the carbon monoxide that is produced in the first reaction is reacted with steam over a catalyst to form hydrogen and carbon dioxide. This step is usually conducted in two stages consisting of a high temperature shift and a low temperature shift. The high temperature shift is typically performed at about 350°C (662°F) and the low temperature shift at about 190°C to 210°C (374°F - 410°F).

$$CO + H_2O -----> CO_2 + H_2$$

c. Hydrogen produced from steam methane reforming typically includes small quantities of carbon monoxide, carbon dioxide, and hydrogen sulfide as impurities and, depending on its intended use, may require further purification. The primary steps for purification is methanation which comprises an exothermic, fixed-bed catalytic reactions of CO and $CO_2$ with hydrogen at temperatures of about 350°C (700°F) to about 423°C (800°F) over a nickel on alumina catalyst.

$$CO + 3H_2 -----> CH_4 + H_2O$$

$$CO_2 + 4H_2 -----> CH_4 + 2H_2O$$

Steam reforming typically produces a product stream containing at least about 95 vol.% hydrogen. The concentration of this hydrogen-containing stream can be increased to up to at least about 98 vol.% and preferably to at least about 99 vol.% by the practice of the present invention.

Heavy feeds such as coke and asphalt may also be converted into hydrogen via partial oxidation of the heavy feed to form hydrogen and carbon monoxide at high temperature. Typically, the partial oxidation of asphalt and coke is more favorable as a means to produce electricity, yielding hydrogen as a byproduct.

Light feeds, from refinery gas to naphtha boiling range, can also be partially oxidized by oxygen in catalytic partial oxidation (POX) processing. In this processing mode, more CO is formed relative to steam reforming. This processing mode finds use in generating synthesis gas for petrochemical feedstocks, or as a debottleneck option for existing steam reforming plants.

Catalytic reforming, or hydroforming, is a well-established industrial process employed by the petroleum industry for improving the octane quality of naphthas or straight run gasolines. In reforming, a multi-functional catalyst is employed which contains a metal hydrogenation/dehydrogenation (hydrogen transfer) component, or components, composited with a porous, inorganic oxide support, notably alumina. Platinum metal catalysts, or a catalyst which contains platinum to which one or more additional metal promoters have been added to form polymetallic catalysts, are conventionally employed in conducting reforming operations. In a reforming operation, one or a series of reactors constitute the reforming unit which provides a series of reaction zones. Reforming results in molecular changes, or hydrocarbon reactions, produced by dehydrogenation of cyclohexanes and dehydroisomerization of alkylcyclopentanes to yield aromatics; dehydrogenation of paraffins to yield olefins; dehydrocyclization of paraffins and olefins to yield aromatics; isomerization of n-paraffins; isomerization of alkylcycloparaffins to yield cyclohexanes; isomerization of substituted aromatics; and hydrocracking of paraffins which produces gas, and inevitably coke, the latter being deposited on the catalyst. The recycled hydrogen suppresses, but cannot prevent the build up of coke. Typical process conditions for the catalytic reforming of naphtha streams include temperatures from about 425° to 650° C, preferably from about 425° to 540° C.; pressures from about 308-2170 kPa (30 to 300 psig) preferably from about 446-1480 kPa (50 to 200 psig); a weight hourly space velocity from about 0.5 to 20, preferably from about 0.75 to 6.

The reforming process unit can either be comprised of a series of reactors, each containing a fixed-bed of catalyst or in a moving bed reactor. Each reforming reactor in a process unit containing a series of fixed bed reactors is generally provided with a fixed bed, or beds, of the catalyst, wherein each receives down-flow feed, and each is provided with a preheater or interstage heater, because the reactions which take place are endothermic. A naphtha feed, with hydrogen, is concurrently passed through a preheat furnace and reactor, and then in sequence through subsequent interstage heaters and reactors of the series. The product from the last reactor is separated into a $C_5$ + liquid fraction which is recovered, and a vaporous effluent. The vaporous effluent is a gas rich in hydrogen, and usually contains small amounts of normally gaseous hydrocarbons, from which hydrogen is separated and recycled to the process.

The general principle of operation of a reforming process unit employing a moving bed reactor is that the catalyst is contained in an annular bed formed by spaced cylindrical screens within the reactor. The reactant stream is processed through the catalyst bed, typically in an out-to-in radial flow, that is, it enters the reactor at the top and flows radially from the reactor wall through the annular bed of catalyst which is descending through the reactor, and passes into the cylindrical space created by said annular bed. It exits the bottom of the reforming zone and is passed to a catalyst regeneration zone where it is subjected to one or more steps common to the practice of reforming catalyst regeneration. The catalyst regeneration zone represents all of the steps required to remove at least a portion of the carbon from the catalyst and return it to the state needed for the reforming reactions occurring in the moving-bed reforming zone(s). The specific steps included in catalyst regeneration will vary with the selected catalyst.

Reforming process units employing a series of fixed-bed reactors are well known in the art and are sometimes referred to in accordance to how the catalyst is regenerated, for example cyclic or semi-regenerative. A detailed description of such process units can be found in United States Patent Numbers 4,719,720; 4,992,401 and 5,368,720. Moving-bed reforming zones, or reactors, are well known in the art and are typical of those taught in United States Patent Numbers 3,652,231; 3,856,662; 4,167,473; and 3,992,465.

The fluid catalytic cracking (FCC) process is well-known. State of the art commercial catalytic cracking catalysts for this process are highly active and selective for converting hydrocarbon charge stocks to liquid fuel products. With such active catalysts it is preferable to conduct catalytic cracking reactions in a dilute phase transport type reaction system with a relatively short period of contact between the catalyst and the hydrocarbon feedstock. In a state of the art process, a regenerated catalyst is fluidized in the lower portion of a riser transport line reactor and mixed with a hydrocarbon charge stock. Hydrocarbon conversion products including a liquid fuel boiling range product, gas and coked catalyst are discharged from the upper end of the riser reactor into a reactor vessel. In the reactor vessel, coked catalyst is separated in a cyclone separator and passed to a stripping section where hydrocarbon vapors are steam stripped from the catalyst. The resulting coke contaminated catalyst, termed spent catalyst, is collected in a spent catalyst standpipe and passed to a vertically arranged regenerator vessel containing a fluidized dense phase catalyst bed. The fluidization is maintained by upwardly flowing oxygen containing regeneration gas introduced by a gas distributor into the lower portion of the dense phase catalyst bed contained in the bottom of the regenerator vessel. Regeneration gas is supplied in excess of that required for complete oxidation of coke as indicated by the analysis of oxygen in flue gas. Above the dense phase catalyst bed is a dilute phase bed wherein residual carbon is oxidized at a temperature higher than in the dense phase bed. Reactivated catalyst, substantially reduced in coke (0.15 wt % or less) is passed vertically upwardly by the fluidizing regeneration gas to an upper portion of the dilute phase bed and into a regenerated catalyst standpipe where it is collected for reuse in the riser reactor. FCC also produces an off gas with a level of hydrogen high enough to warrant separating it from the off-gas, or increasing its concentration in the off gas so that it can be used as at least a portion of a hydrogen-containing treat gas stream to a process unit, such as a hydroprocessing unit in which hydrogen is a reactant.

United States Patent Number 4,481,103 to F. J. Krambeck et al. discloses a fluid catalytic cracking (FCC) process for converting a sulfur containing hydrocarbon charge. Spent catalyst is subjected to steam stripping at a temperature of 500 °C to 700 °C for 1 to 10 minutes in the absence of oxygen. As a result, coke and sulfur are removed from the catalyst.

The thermal cracking of hydrocarbons is the principal route for the industrial production of ethylene, in so called ethylene crackers, via a free radical mechanism. Commercially, the cracking is carried out in tubular reactors, known as pyrolysis coils, in the radiant zone of a furnace. Steam is added to the feed to reduce the formation of coke in the pyrolysis tubes. The temperature of the feed is typically between 500 and 700°C (930 to 1300°F), with lower temperatures used for heavier feeds such as atmospheric and vacuum gas oils, and higher temperatures used for light gases such as ethane and propane; depending on the residence time and required severity, the outlet temperature is typically maintained between 775 and 950°C (1430 to 1740°F), and the total residence time can range from 0.1 to 1 second. Since the thermal cracking reaction is endothermic, heat is supplied to the pyrolysis tube by the furnace.

The yield of hydrogen from the ethylene cracker varies, and is strongly dependent on the feed used. For lighter feeds such as ethane, hydrogen yields (based on feed) of almost 4% can be realized, while heavier feeds such as butane and vacuum gas oil produce less hydrogen (1 and 0.7%, respectively). Product separation and recovery is typically accomplished in several stages, including: a gasoline fractionator to remove heavy fuel oil cuts, a quench tower, compression, acid gas removal ($H_2S$, $CO_2$) with a basic solution, drying over molecular sieves to remove water, and a stripper to remove $C_3$ and heavier products. In the final stage of product purification, hydrogen is recovered in a cryogenic distillation: by cooling the $C_2^-$ stream to -16°C, hydrogen is recovered since $H_2$ is the only gas at that temperature.

Processes for recovering the hydrogen from these hydrogen generation units must match the hydrogen volumes and purities required. A conventional pressure swing adsorption device is typically utilized to recover hydrogen from a steam methane reforming unit or a residua gasification unit, while catalytic reformers typically utilize a separator to remove hydrocarbon condensate from the hydrogen produced. The hydrogen produced in cracking, including thermal, catalytic (i.e., FCC), and ethylene cracking, is not typically recovered due to poor economics. However, it may be advantageous to recover the hydrogen so as to debottleneck the distillative recovery section employed downstream of cracking units for the recovery of light ends, typically referred to as the "wet gas" ($C_4^-$) or "dry gas" ($C_2^-$) recovery trains.

Hydrogen-containing streams from units that recover hydrogen from other streams in a petroleum refinery or petrochemical plant can also be treated in accordance with the present invention to increase hydrogen concentration. Non-limiting examples of such sources include cryogenic units, membrane units, and conventional pressure swing adsorption units. Wet scrubbing is commonly used to remove acid gases, such as H2S and CO2. The process involves passing the gaseous stream through an amine or a potassium carbonate system. Membrane units for hydrogen recovery take advantage of the different diffusivity of hydrogen versus other contaminants though a membrane. Hydrogen, the permeate through the membrane, is produced at low pressure. Cryogenic separation operates by cooling the gas feedstream, so as to condense a fraction of the feed, followed by separation via either flashing or distillation. This type of separation is typically employed to recover light olefins from the FCC offgas, and finds use in ethylene crackers. Hydrogen recovery from cryogenic distillation is typically 95%, with 98% purity. Clearly, any of these processes, or combinations thereof, can be used to recover hydrogen.

In Conventional Pressure Swing Adsorption ("conventional PSA") a gaseous mixture is conducted under pressure for a period of time over a first bed of a solid sorbent that is selective or relatively selective for one or more components, usually regarded as a contaminant that is to be removed from the gas stream. It is possible to remove two or more contaminants simultaneously but for convenience, the component or components that are to be removed will be referred to in the singular and referred to as a contaminant. The gaseous mixture is passed over a first adsorption bed in a first vessel and emerges from the bed depleted in the contaminant that remains sorbed in the bed. After a predetermined time or, alternatively when a break-through of the contaminant is observed, the flow of the gaseous mixture is switched to a second adsorption bed in a second vessel for the purification to continue. While the second bed is in adsorption service, the sorbed contaminant is removed from the first adsorption bed by a reduction in pressure, usually accompanied by a reverse flow of gas to desorb the contaminant. As the pressure in the vessels is reduced, the contaminant previously adsorbed on the bed is progressively desorbed into the tail gas system that typically comprises a large tail gas drum, together with a control system designed to minimize pressure fluctuations to downstream systems. The contaminant can be collected from the tail gas system in any suitable manner and processed further or disposed of as appropriate. When desorption is complete, the sorbent bed may be purged with an inert gas stream, e.g., nitrogen or a purified stream of the process gas. Purging may be facilitated by the use of a higher temperature purge gas stream.

After, e.g., breakthrough in the second bed, and after the first bed has been regenerated so that it is again prepared for adsorption service, the flow of the gaseous mixture is switched from the second bed to the first bed, and the second bed is regenerated. The total cycle time is the length of time from when the gaseous mixture is first conducted to the first bed in a first cycle to the time when the gaseous mixture is first conducted to the first bed in the immediately succeeding cycle, i.e., after a single regeneration of the first bed. The use of third, fourth, fifth, etc. vessels in addition to the second vessel, as might be needed when adsorption time is short but desorption time is long, will serve to increase cycle time.

Thus, in one configuration, a pressure swing cycle will include a feed step, at least one depressurization step, a purge step, and finally a repressurization step to prepare the adsorbent material for reintroduction of the feed step. The sorption of the contaminants usually takes place by physical sorption onto the sorbent that is normally a porous solid such as activated carbon, alumina, silica or silica-alumina that has an affinity for the contaminant. Zeolites are often used in many applications since they may exhibit a significant degree of selectivity for certain contaminants by reason of their controlled and predictable pore sizes. Normally, chemical reaction with the sorbent is not favored in view of the increased difficulty of achieving desorption of species which have become chemically bound to the sorbent, but chemisorption is my no means to be excluded if the sorbed materials may be effectively desorbed during the desorption portion of the cycle, e.g., by the use of higher temperatures coupled with the reduction in pressure. Pressure swing adsorption processing is described more fully in the book entitled Pressure Swing Adsorption, by D. M. Ruthven, S. Farouq & K. S. Knaebel (VCH Publishers, 1994).

Conventional PSA possesses significant inherent disadvantages for a variety of reasons. For example, conventional PSA units are costly to build and operate and are significantly larger in size for the same amount of hydrogen that needs to be recovered from hydrogen-containing gas streams as compared to RCPSA. Also, a conventional pressure swing adsorption unit will generally have cycle times in excess of one minute, typically in excess of 2 to 4 minutes due to time limitations required to allow diffusion of the components through the larger beds utilized in conventional PSA and the equipment configuration and valving involved. In contrast, rapid cycle pressure swing adsorption is utilized which has total cycle times of less than 10 seconds, even more preferably less than 5 seconds, and even more preferably less 2 seconds. Further, the rapid cycle pressure swing adsorption units used can make use of substantially different sorbents, such as, but not limited to, structured materials such as monoliths.

The overall adsorption rate of the adsorption processes, whether conventional PSA or RCPSA, is characterized by the mass transfer rate constant in the gas phase ($\tau_g$) and the mass transfer rate constant in the solid phase ($\tau_s$). A material's mass transfer rates of a material are dependent upon the adsorbent, the adsorbed compound, the pressure and the temperature. The mass transfer rate constant in the gas phase is defined as:

$$\tau_g = D_g / R_g^2 \qquad \text{(in cm}^2\text{/sec)} \qquad (1)$$

where Dg is the diffusion coefficient in the gas phase and $R_g$ is the characteristic dimension of the gas medium. Here the gas diffusion in the gas phase, Dg, is well known in the art (i.e., the conventional value can be used) and the characteristic dimension of the gas medium, $R_g$ is defined as the channel width between two layers of the structured adsorbent material.

The mass transfer rate constant in the solid phase of a material is defined as:

$$\tau_s = D_s / R_s^2 \qquad \text{(in cm}^2\text{/sec)} \qquad (2)$$

where $D_s$ is the diffusion coefficient in the solid phase and $R_s$ is the characteristic dimension of the solid medium. Here the gas diffusion coefficient in the solid phase, $D_s$, is well known in the art (i.e., the conventional value can be used) and the characteristic dimension of the solid medium, $R_s$ is defined as the width of the adsorbent layer.

D. M. Ruthven & C. Thaeron, Performance of a Parallel Passage Absorbent Contactor, Separation and Purification Technology 12 (1997) 43-60, clarifies that for flow through a monolith or a structured adsorbent that channel width is a good characteristic dimension for the gas medium, $R_g$. United States Patent Number 6,607,584 to Moreau et al., also describes the details for calculating these transfer rates and associated coefficients for a given adsorbent and the test standard compositions used for conventional PSA. Calculation of these mass transfer rate constants is well known to one of ordinary skill in the art and may also be derived by one of ordinary skill in the art from standard testing data.

Conventional PSA relies on the use of adsorbent beds of particulate adsorbents. Additionally, due to construction constraints, conventional PSA is usually comprised of 2 or more separate beds that cycle so that at least one or more beds is fully or at least partially in the feed portion of the cycle at any one time in order to limit disruptions or surges in the treated process flow. However, due to the relatively large size of conventional PSA equipment, the particle size of the adsorbent material is general limited particle sizes of about 1 mm and above. Otherwise, excessive pressure drop, increased cycle times, limited desorption, and channeling of feed materials will result.

In an embodiment, RCPSA utilizes a rotary valving system to conduct the gas flow through a rotary sorber module that contains a number of separate adsorbent bed compartments or "tubes", each of which is successively cycled through the sorption and desorption steps as the rotary module completes the cycle of operations. The rotary sorber module is normally comprised of multiple tubes held between two seal plates on either end of the rotary sorber module wherein the seal plates are in contact with a stator comprised of separate manifolds wherein the inlet gas is conducted to the RCPSA tubes and processed purified product gas and the tail gas exiting the RCPSA tubes is conducted away from rotary sorber module. By suitable arrangement of the seal plates and manifolds, a number of individual compartments or tubes may pass through the characteristic steps of the complete cycle at any one time. In contrast with conventional PSA, the flow and pressure variations required for the RCPSA sorption/desorption cycle changes in a number of separate increments on the order of seconds per cycle, which smoothes out the pressure and flow rate pulsations encountered by the compression and valving machinery. In this form, the RCPSA module includes valving elements angularly spaced around the circular path taken by the rotating sorption module so that each compartment is successively passed to a gas flow path in the appropriate direction and pressure to achieve one of the incremental pressure/flow direction steps in the complete RCPSA cycle. One key advantage of the RCPSA technology is a significantly more efficient use of the adsorbent material. The quantity of adsorbent required with RCPSA technology can be only a fraction of that required for conventional PSA technology to achieve the same separation quantities and qualities. As a result, the footprint, investment, and the amount of active adsorbent required for RCPSA is significantly lower than that for a conventional PSA unit processing an equivalent amount of gas.

In an embodiment, RCPSA bed length unit pressure drops, required adsorption activities, and mechanical constraints (due to centrifugal acceleration of the rotating beds in RCPSA), prevent the use of many conventional PSA adsorbent bed materials, in particular adsorbents that are in a loose pelletized, particulate, beaded, or extrude form.

In a preferred embodiment, adsorbent materials are secured to a supporting understructure material for use in an RCPSA rotating apparatus. For example, one embodiment of the rotary RCPSA apparatus can be in the form of adsorbent sheets comprising adsorbent material coupled to a structured reinforcement material. A suitable binder may be used to attach the adsorbent material to the reinforcement material. Non-limiting examples of reinforcement material include monoliths, a mineral fiber matrix, (such as a glass fiber matrix), a metal wire matrix (such as a wire mesh screen), or a metal foil (such as aluminum foil), which can be anodized. Examples of glass fiber matrices include woven and non-woven glass fiber scrims. The adsorbent sheets can be made by coating a slurry of suitable adsorbent component, such as zeolite crystals with binder constituents onto the reinforcement material, non-woven fiber glass scrims, woven metal fabrics, and expanded aluminum foils. In a particular embodiment, adsorbent sheets or material are coated onto ceramic supports.

An absorber in a RCPSA unit typically comprises an adsorbent solid phase formed from one or more adsorbent materials and a permeable gas phase through which the gases to be separated flow from the inlet to the outlet of the adsorber, with a substantial portion of the components desired to be removed from the stream adsorbing onto the solid phase of the adsorbent. This gas phase may be called "circulating gas phase", but more simply "gas phase". The solid phase includes a network of pores, the mean size of which is usually between approximately 0.02 $\mu$m and 20 $\mu$m. There may be a network of even smaller pores, called "micropores", this being encountered, for example, in microporous carbon adsorbents or zeolites. The solid phase may be deposited on a non-adsorbent support, the primary function of which is to provide mechanical strength for the active adsorbent materials and/or provide a thermal conduction function or to store heat. The phenomenon of adsorption comprises two main steps, namely passage of the adsorbate from the circulating gas phase onto the surface of the solid phase, followed by passage of the adsorbate from the surface to the volume of the solid phase into the adsorption sites.

In an embodiment, RCPSA utilizes a structured adsorbent which is incorporated into the tubes utilized in the RSPCA apparatus. These structured adsorbents have an unexpectedly high mass transfer rate since the gas flows through the channels formed by the structured sheets of the adsorbent which offers a significant improvement in mass transfer as compared to a traditional packed fixed bed arrangement as utilized in conventional PSA. The ratio of the transfer rate of the gas phase ($\tau_g$) and the mass transfer rate of the solid phase ($\tau_s$) in the current invention is greater than 10, preferably greater than 25, more preferably greater than 50. These extraordinarily high mass transfer rate ratios allow RCPSA to produce high purity hydrogen streams at high recovery rates with only a fraction of the equipment size, adsorbent volume, and cost of conventional PSA.

The structured adsorbent embodiments also results in significantly greater pressure drops to be achieved through the adsorbent than conventional PSA without the detrimental effects associated with particulate bed technology. The adsorbent beds can be designed with adsorbent bed unit length pressure drops of greater than 4, 086 kPa per metre of bed length (5 inches of water per foot of bed length), more preferably greater than 8,172 kPa per metre of bed length (10 in.H$_2$O/ft), and even more preferably greater than 16,344 kPa per metre of bed length (20 in. H$_2$O/ft). This is in contrast with conventional PSA units where the adsorbent bed unit length pressure drops are generally limited to below about 4,086 kPa per metre of bed length (5 in. H$_2$O/ft) depending upon the adsorbent used, with most conventional PSA units being designed with a pressure drop of about 0,816 kPa per metre of bed length (1 in. H$_2$O/ft) or less to minimize the problems discussed that are associated with the larger beds, long cycle time, and particulate absorbents of conventional PSA units. The adsorbent beds of conventional PSA cannot accommodate higher pressure drops because of the risk of fluidizing the beds which results in excessive attrition and premature unit shutdowns due to accompanying equipment problems and/or a need to add or replace lost adsorbent materials. These markedly higher adsorbent bed unit length pressure drops allow RCPSA adsorbent beds to be significantly more compact, shorter, and efficient than those utilized in conventional PSA.

In an embodiment, high unit length pressure drops allow high vapor velocities to be achieved across the structured adsorbent beds. This results in a greater mass contact rate between the process fluids and the adsorbent materials in a unit of time than can be achieved by conventional PSA. This results in shorter bed lengths, higher gas phase transfer rates ($\tau_g$) and improved hydrogen recovery. With these significantly shorter bed lengths, total pressure drops of the RSCPA application of the present invention can be maintained at total bed pressure differentials during the feed cycle of about 105-446 kPa (0.5 to 50 psig), preferably less than 308 kPa (30 psig), while minimizing the length of the active beds to normally less than 1.52 m (5 feet) in length, preferably less than 0.61 m (2 feet) in length and as short as less than 0.30 m (1 foot) in length.

The absolute pressure levels employed during the RCPSA process are not critical. In practice, provided that the pressure differential between the adsorption and desorption steps is sufficient to cause a change in the adsorbate fraction loading on the adsorbent thereby providing a delta loading effective for separating the stream components processed by the RCPSA unit. Typical absolute operating pressure levels range from about 345-1.72·10$^4$ kPa (50 to 2500 psia). However, it should be noted that the actual pressures utilized during the feed, depressurization, purge and repressurization stages are highly dependent upon many factors including, but not limited to, the actual operating pressure and temperature of the overall stream to be separated, stream composition, and desired recovery percentage and purity of the RCPSA product stream. The RCPSA process is not specifically limited to any absolute pressure and due to its compact size becomes incrementally more economical than conventional PSA processes at the higher operating pressures.

United States Patent Numbers 6,406,523; 6,451,095; 6,488,747; 6,533,846 and 6,565,635 disclose various aspects of RCPSA technology.

In an embodiment and an example, the rapid cycle pressure swing adsorption system has a total cycle time, $t_{TOT}$, to separate a feed gas into product gas (in this case, a hydrogen-enriched stream) and a tail (exhaust) gas. The method generally includes the steps of conducting the feed gas having a hydrogen purity F%, where F is the percentage of the feed gas which is the weakly-adsorbable (hydrogen) component, into an adsorbent bed that selectively adsorbs the tail gas and passes the hydrogen product gas out of the bed, for time, $t_F$, wherein the hydrogen product gas has a purity of P% and a rate of recovery of R%. Recovery R % is the ratio of amount of hydrogen retained in the product to the amount of hydrogen available in the feed. Then the bed is co-currently depressurized for a time, $t_{CO}$, followed by counter-currently depressurizing the bed for a time, $t_{CN}$, wherein desorbate (tail gas or exhaust gas) is released from the bed at a pressure greater than or equal to 108 kPa (1 psig). The bed is purged for a time, tp, typically with a portion of the hydrogen product gas. Subsequently the bed is repressurized for a time, $t_{RP}$, typically with a portion of hydrogen product gas or feed gas , wherein the cycle time, $t_{TOT}$, is equal to the sum of the individual cycle times comprising the total cycle time, i.e.:

$$t_{TOT} = t_F + t_{CO} + t_{CN} + t_P + t_{RP} \qquad (3)$$

The RCPSA process of the invention is such that either the rate of recovery, R% > 80% for a product purity to feed purity ratio, P%/F% > 1.1, and/or the rate of recovery, R% > 90% for a product purity to feed purity ratio, P%/F% 1.1 or less. Results supporting these high recovery & purity ranges can be found in Examples 4 through 10 herein. Other embodiments will include applications of RCPSA in processes where hydrogen recovery rates are significantly lower than 80%. Embodiments of RCPSA are not limited to exceeding any specific recovery rate or purity thresholds and can be as applied at recovery rates and/or purities as low as desired or economically justifiable for a particular application.

It should also be noted that it is within the scope of this invention that steps $t_{CO}$, $t_{CN}$, or $t_P$ of equation (3) above can be omitted together or in any individual combination. However it is preferred that all steps in the above equation (3) be performed or that only one of steps $t_{CO}$ or $t_{CN}$ be omitted from the total cycle. However, additional steps can also be added within a RCPSA cycle to aid in enhancing purity and recovery of hydrogen. Thus enhancement could be practically achieved in RCPSA because of the small portion of absorbent needed and due to the elimination of a large number of stationary valves utilized in conventional PSA applications.

In an embodiment, the tail gas is also preferably released at a pressure high enough so that the tail gas may be fed to another device absent tail gas compression. The tail gas pressure is greater than or equal to 515 kPa (60 psig). In a most preferred embodiment, the tail gas pressure is greater than or equal to 653 kPa (80 psig). At higher pressures, the tail gas can be conducted to a fuel header.

Practice of the present invention can have the following benefits:

Increasing the purity of hydrogen-containing stream(s) available as makeup gas, or of streams which must be upgraded to higher purity before they are suitable as make-up gas.

Increasing the purity of hydrogen-containing recycle gas streams resulting in an increase in overall hydrogen treat gas purity in the hydrotreating reactors to allow for higher hydrotreating severity or additional product treating.

Use for $H_2$ recovery from hydroprocessing purge gases, either where significant concentrations of $H_2S$ are present (before gas scrubbing) or after gas scrubbing (typically <100 vppm $H_2S$).

In hydroprocessing, increased $H_2$ purity translates to higher $H_2$ partial pressures in the hydroprocessing reactor(s). This both increases the reaction kinetics and decreases the rate of catalyst deactivation. The benefits of higher $H_2$ partial pressures can be exploited in a variety of ways, such as:

operating at lower reactor temperature, which reduces energy costs, decreases catalyst deactivation, and extends catalyst life; increasing unit feed rate; processing more sour (higher sulfur) feedstocks; processing higher concentrations of cracked feedstocks; improved product color, particularly near end of run; debottlenecking existing compressors and/or treat gas circuits (increased scf $H_2$ at constant total flow, or same scf $H_2$ at lower total flow); and other means that would be apparent to one skilled in the art.

Increased $H_2$ recovery also offers significant potential benefits, some of which are described as follows:

(i) reducing the demand for purchased, manufactured, or other sources of $H_2$ within the refinery;
(ii) increasing hydroprocessing feed rates at constant (existing) makeup gas demands as a result of the increased hydrogen recovery;

(iii) improving the hydrogen purity in hydroprocessing for increased heteroatom removal efficiencies;

(iv) removing a portion of the $H_2$ from refinery fuel gas which is detrimental to the fuel gas due to hydrogen's low BTU value which can present combustion capacity limitations and difficulties for some furnace burners;

(v) Other benefits that would be apparent to one knowledgeable in the art.

The following examples are presented for illustrative purposes only and should not be cited as being limiting in any way.

Example 1

In this example, the refinery stream is at 3410 kPa (480 psig) with tail gas a 549 kPa (65 psig) whereby the pressure swing is 6.18. The feed composition and pressures are typical of refinery processing units such as those found in hydroprocessing or hydrotreating applications. In this example typical hydrocarbons are described by their carbon number i.e. $C_1$ = methane , $C_2$ = ethane etc. The RCPSA is capable of producing hydrogen at > 99 % purity and > 81 % recovery over a range of flow rates. Tables 2a and 2b show the results of computer simulation of the RCPSA and the input and output percentages of the different components for this example. Tables 2a and 2b also show how the hydrogen purity decreases as recovery is increased from 89.7% to 91.7 % for a 1.97 standard $m^3s^{-1}$ (6 MMSCFD) stream at 3410 kPa (480 psig) and tail gas at 549 kPa (65 psig).

**Tables 2a & 2b**

**Composition (mol %) of input and output from RCPSA (67 ft$^3$) (1.90m$^3$) in H2 purification. Feed is at 480 psig (33.10 barg), 122 deg F (50°C) and Tail gas at 65 psig (4.48 barg). Feed rate is about 6 MMSCFD (1.97 standard m$^3$s$^{-1}$).**

**Table 2a - Higher purity**

**Step Times in seconds are $t_F$ = 1, $t_{CO}$ = 0.167, $t_{CN}$ = 0, $t_P$ = 0.333, $t_{RP}$ = 0.5**

H2 at 98.6% purity, 89.7% recovery

|  | FEED | PRODUCT | TAIL-GAS |
|---|---|---|---|
| H2 | 88.0 | 98.69 | 45.8 |
| C1 | 6.3 | 1.28 | 25.1 |
| C2 | 0.2 | 0.01 | 1.0 |
| C3 | 2.6 | 0.01 | 12.3 |
| C4+ | 2.9 | 0.00 | 14.8 |
| H2O | 2000 vppm | 65 vppm | 9965 vppm |
| TOTAL (MMSCFD) | 6.162 | 4.934 | 1.228 |
| TOTAL (standard m$^3$s$^{-1}$) | 2.02 | 1.62 | 0.40 |
|  | 480 psig (33.10 barg) | 470 psig (32.40 barg) | 65 psig (4.48 barg) |

**Table 2b - Higher purity**

**Step Times in seconds are $t_F$ = 1, $t_{CO}$ = 0.333, $t_{CN}$ = 0, $t_P$ = 0.167, $t_{RP}$ = 0.5**

H2 at 97.8% purity, 91.7% recovery

|  | FEED | PRODUCT | TAIL-GAS |
|---|---|---|---|
| H2 | 88.0 | 97.8 | 45.9 |
| C1 | 6.3 | 2.14 | 25.0 |
| C2 | 0.2 | 0.02 | 1.0 |
| C3 | 2.6 | 0.02 | 12.3 |
| C4+ | 2.9 | 0.00 | 14.9 |

(continued)

| Step Times in seconds are $t_F = 1$, $t_{CO} = 0.333$, $t_{CN} = 0$, $t_P = 0.167$, $t_{RP} = 0.5$ | | | |
|---|---|---|---|
| H2 at 97.8% purity, 91.7% recovery | | | |
| | FEED | PRODUCT | TAIL-GAS |
| H2O | 2000 vppm | 131 vppm | 10016 vpm |
| TOTAL (MMSCFD) | 6.160 | 5.085 | 1.074 |
| TOTAL (standard $m^3 s^{-1}$) | 2.02 | 1.67 | 0.35 |
| | 480 psig (33.10 barg) | 470 psig (32.40 barg) | 65 psig (4.48 barg) |

The RCPSA's described in the present invention operate a cycle consisting of different steps. Step 1 is feed during which product is produced, step 2 is co-current depressurization, step 3 is counter-current depressurization, step 4 is purge, usually counter-current) and step 5 is repressurization with product. In the RCPSA's described here at any instant half the total number of beds are on the feed step. In this example, $t_{TOT} = 2$ sec in which the feed time, $t_F$, is one-half of the total cycle.

## Example 2

In this example, the conditions are the same as in Example 1. Table 3a shows conditions utilizing both a co-current and counter-current steps to achieve hydrogen purity > 99 %. Table 3b shows that the counter-current depressurization step may be eliminated, and a hydrogen purity of 99% can still be maintained. In fact, this shows that by increasing the time of the purge cycle, $t_P$, by the duration removed from the counter-current depressurization step, $t_{CN}$, that hydrogen recovery can be increased to a level of 88%.

**Tables 3a & 3b**

**Effect of step durations on H2 purity and recovery from an RCPSA (67 ft$^3$) (1.90m$^3$). Same conditions as Table 2. Feed is at 480 psig (33.10 barg), 122 deg F (50°C) and Tail gas at 65 psig (4.48 barg). Feed rate is about 6 MMSCFD (1.97 standard m$^3$s$^{-1}$).**

**Table 3a.**

| With counter-current depress, Intermediate pressure = 105 psig (7.24 barg). | | | | | | |
|---|---|---|---|---|---|---|
| Purity | Recovery | $t_F$ | $t_{CO}$ | $t_{CN}$ | $t_P$ | $t_{RP}$ |
| % | % | s | S | s | S | S |
| 98.2 | 84.3 | 1 | 0.283 | 0.05 | 0.167 | 0.5 |
| 98.3 | 85 | 1 | 0.166 | 0.167 | 0.167 | 0.5 |
| 99.9 | 80 | 1 | 0.083 | 0.25 | 0.167 | 0.5 |

**Table 3b.**

| Without counter-current depress | | | | | | |
|---|---|---|---|---|---|---|
| Purity | Recovery | $t_F$ | $t_{CO}$ | $t_{CN}$ | $t_P$ | $t_{RP}$ |
| % | % | s | S | s | S | s |
| 97.8 | 91.7 | 1 | 0.333 | 0 | 0.167 | 0.5 |
| 98.7 | 90 | 1 | 0.166 | 0 | 0.334 | 0.5 |
| 99 | 88 | 1 | 0.083 | 0 | 0.417 | 0.5 |

### Example 3

This example shows a 3.28 standard $m^3s^{-1}$ (10 MMSCFD) refinery stream, once again containing typical components, as shown in feed column of Table 4 (e.g. the feed composition contains 74 % $H_2$). The stream is at 3410 kPa (480 psig) with RCPSA tail gas at 549 kPa (65 psig) whereby the absolute pressure swing is 6.18. Once again the RCPSA of the present invention is capable of producing hydrogen at > 99 % purity and > 85 % recovery from these feed compositions. Tables 4a and 4b show the results of this example.

### Tables 4a & 4b

Composition (mol %) of input and output from RCPSA (53 ft³) (1.50m³) in H2 purification. Feed is at 480 psig (33.10 barg), 101 deg F (38.3°C) and Tail gas at 65 psig (4.48 barg).

Feed rate is about 10 MMSCFD (3.28 standard $m^3s^{-1}$).

#### Table 4a. Higher purity

Step Times in seconds are $t_F$ = 0.583, $t_{CO}$ = 0.083, $t_{CN}$ = 0, $t_P$ = 0.25, $t_{RP}$ = 0.25

H2 at 99.98 % purity and 86 % recovery

|  | FEED | PRODUCT | TAIL-GAS |
|---|---|---|---|
| H2 | 74.0 | 99.98 | 29.8 |
| C1 | 14.3 | 0.02 | 37.6 |
| C2 | 5.2 | 0.00 | 13.8 |
| C3 | 2.6 | 0.00 | 7.4 |
| C4+ | 3.9 | 0.00 | 11.0 |
| H2O | 2000 vppm | 0.3 vppm | 5387 vppm |
| TOTAL (MMSCFD) | 10.220 | 6.514 | 3.705 |
| TOTAL (standard $m^3s^{-1}$) | 3.45 | 2.14 | 1.21 |
|  | 480 psig (33.10 barg) | 470 psig (32.40 barg) | 65 psig (4.48 barg) |

#### Table 4b - Lower purity

Step Times in seconds are $t_F$ = 0.5, $t_{CO}$ = 0.167, $t_{CN}$ = 0, $t_P$ = 0.083, $t_{RP}$ = 0.25

H2 at 93 % purity and 89 % recovery

|  | FEED | PRODUCT | TAIL-GAS |
|---|---|---|---|
| H2 | 74.0 | 93.12 | 29.3 |
| C1 | 14.3 | 6.34 | 31.0 |
| C2 | 5.2 | 0.50 | 16.6 |
| C3 | 2.6 | 0.02 | 8.9 |
| C4+ | 3.9 | 0.00 | 13.4 |
| H2O | 2000 vppm | 142 vppm | 6501 vppm |
| TOTAL (MMSCFD) | 10.220 | 7.240 | 2.977 |
| TOTAL (standard $m^3s^{-1}$) | 3.45 | 2.37 | 0.98 |
|  | 480 psig (33.10 barg) | 470 psig (32.40 barg) | 65 psig (4.48 barg) |

In both cases shown in Table 4a and 4b above, although tail gas pressure is high a 349 kPa (65 psig), the present invention shows that high purity (99 %) may be obtained if the purge step, $t_P$, is sufficiently increased.

Tables 3a, 3b and 4a show that for both 1.97 standard $m^3s^{-1}$ (6 MMSCFD) and 3.28 standard $m^3s^{-1}$ (10 MMSCFD) flow rate conditions, very high purity hydrogen at ~99 % and > 85 % recovery is achievable with the RCPSA. In both cases the tail gas is at 349 kPa (65 psig). Such high purities and recoveries of product gas achieved using the RCPSA with all the exhaust produced at high pressure have not been discovered before and are a key feature of the present invention.

Table 4c shows the results for an RCPSA (volume = 49 cubic ft (1.39m$^3$)) that delivers high purity (> 99%) H$_2$ at high recovery for the same refinery stream discussed in Tables 4a and 4b. As compared to Table 4a, Table 4c shows that similar purity and recovery rates can be achieved by simultaneously decreasing the duration of the feed cycle, t$_F$, and the purge cycle, t$_P$.

**Table 4c**

Effect of step durations on H2 purity and recovery from an RCPSA (49 ft$^3$) (1.39m$^3$). Feed is at 480 psig (33.10 barg), 101 deg F (38.3°C) and Tail gas at 65 psig (4.48 barg). Feed rate is about 10 MMSCFD (3.28 standard m$^3$s$^{-1}$).

Without counter-current depress

| Purity | Recovery | t$_F$ | t$_{CO}$ | t$_{CN}$ | t$_P$ | t$_{RP}$ |
|---|---|---|---|---|---|---|
| % | % | s | S | S | s | s |
| 95.6 | 87.7 | 0.5 | 0.167 | 0 | 0.083 | 0.25 |
| 97.6 | 86 | 0.5 | 0.117 | 0 | 0.133 | 0.25 |
| 99.7 | 85.9 | 0.5 | 0.083 | 0 | 0.167 | 0.25 |

## Example 4

In this example, Table 5 further illustrates the performance of RCPSA's. In this example, the feed is a typical refinery stream and is at a pressure of 2170 kPa (300 psig). The RCPSA of the present invention is able to produce 99 % pure hydrogen product at 83.6 % recovery when all the tail gas is exhausted at 377 kPa (40 psig). In this case the tail gas can be sent to a flash drum or other separator or other downstream refinery equipment without further compression requirement. Another important aspect is that the RCPSA also removes CO to < 2 vppm, which is extremely desirable for refinery units that use the product hydrogen enriched stream. Lower levels of CO ensure that the catalysts in the downstream units operate without deterioration in activity over extended lengths. Conventional PSA cannot meet this CO specification and simultaneously also meet the condition of exhausting all the tail gas at the higher pressure, such as at typical fuel header pressure or the high pressure of other equipment that processes such RCPSA exhaust. Since all the tail gas is available at 377 kPa (40 psig) or greater, no additional compression is required for integrating the RCPSA with refinery equipment.

**Table 5**

Composition (mol %) of input and output from RCPSA (4 ft$^3$) (0.11m$^3$) in carbon monoxide and hydrocarbon removal from hydrogen. Feed is at 300 psig (20.7 barg), 101 deg F (38.3°C), and Feed rate is about 0.97 MMSCFD (0.32 standard m$^3$s$^{-1}$).

Step Times in seconds are t$_F$ =0.5, t$_{CO}$ =0.1, t$_{CN}$ =0, t$_P$ =0.033, t$_{RP}$ =0.066

H2 at 99.99 % purity and 88 % recovery

| | FEED | PRODUCT | TAIL-GAS |
|---|---|---|---|
| H2 | 89.2 | 99.98 | 48.8 |
| C1 | 3.3 | 0.01 | 13.9 |
| C2 | 2.8 | 0.01 | 13.9 |
| C3 | 2.0 | 0.00 | 10.2 |
| C4+ | 2.6 | 0.00 | 13.2 |
| CO | 50 | 1.1 | 198.4 |
| TOTAL | 0.971 | 0.760 | 0.211 |
| TOTAL (standard m$^3$s$^{-1}$) | 0.32 | 0.25 | 0.07 |
| | 300 psig (20.7 barg) | 290 psig (20.00 barg) | 40 psig (2.76 barg) |

## Example 5

Tables 6a and 6b compare the performance of RCPSA's operated in accordance with the invention being described here. The stream being purified has lower $H_2$ in the feed (51% mol) and is a typical refinery/petrochemical stream. In both cases (corresponding to Tables 6a and 6b), a counter current depressurization step is applied after the co-current step. In accordance with the invention, Table 6a shows that high $H_2$ recovery (81 %) is possible even when all the tail gas is released at 549 kPa (65 psig) or greater. In contrast, the RCPSA where some tail-gas is available as low as 5 psig, loses hydrogen in the counter-current depressurization such that $H_2$ recovery drops to 56%. In addition, the higher pressure of the stream in Table 6a indicates that no tail gas compression is required.

**Tables 6a and 6b**

**Effect of Tail Gas Pressure on recovery. Example of RCPSA applied to a feed with H2 concentration (51.3 mol %). Composition (mol %) of input and output from RCPSA (31 ft³) (0.88 m³) in H2 purification. Feed is at 273 psig (18.80 barg), 122 deg F (50°C) and Feed rate is about 5.1 MMSCFD (1.67 standard m³s⁻¹).**

**Table 6a**

**Step Times in seconds are $t_F$ = 0.5, tco = 0.083, $t_{CN}$ = 0.033, $t_P$ = 0.25, $t_{RP}$ = 0.133**

[A] Tail gas available from 65-83 psig (4.48-5.72 barg), H2 at 99.7% purity and 81 % recovery

| | FEED | PRODUCT | TAIL-GAS |
|---|---|---|---|
| H2 | 51.3 | 99.71 | 20.1 |
| C1 | 38.0 | 0.29 | 61.0 |
| C2 | 4.8 | 0.00 | 8.0 |
| C3 | 2.2 | 0.00 | 3.8 |
| C4+ | 3.7 | 0.00 | 6.4 |
| H20 | 4000 vppm | 0.7 vppm | 6643 vppm |
| TOTAL (MMSCFD) | 5.142 | 2.141 | 3.001 |
| TOTAL (standard m³s⁻¹) | 1.69 | 0.70 | 0.99 |
| | 273 psig (18.80 barg) | 263 psig (18.10 barg) | 65-83 psig (4.48-5.72 barg) |

**Table 6b**

**Step Times in sec. are $t_F$ = 0.667, tco = 0.167, $t_{CN}$ = 0.083, $t_P$ = 0.083, $t_{RP}$ =0.33**

[B] Tail gas available from 5-65 psig (0.34-4.48 barg), H2 at 99.9 % purity and 56 % recovery

| | FEED | PRODUCT | TAIL-GAS |
|---|---|---|---|
| H2 | 51.3 | 99.99 | 34.2 |
| C1 | 38.0 | 0.01 | 48.8 |
| C2 | 4.8 | 0.00 | 6.9 |
| C3 | 2.2 | 0.00 | 3.4 |
| C4+ | 3.7 | 0.00 | 6.2 |
| H20 | 4000 vppm | 0.0 vppm | 5630 vppm |
| TOTAL (MMSCFD) | 5.142 | 1.490 | 3.651 |
| TOTAL (standard m³s⁻¹) | 1.69 | 0.49 | 1.20 |
| | 273 psig (18.80 barg) | 263 psig (18.10 barg) | 5-65 psig (0.34-4.48 barg) |

**Example 6**

In this example, Tables 7a and 7b compare the performance of RCPSA's operated in accordance with the invention being described here. In these cases, the feed pressure is 5617 kPa (800 psig) and tail gas is exhausted at either 549 kPa (65 psig) or at 790 kPa (100 psig). The composition reflects typical impurities such H2S, which can be present in such refinery applications. As can be seen, high recovery (> 80% ) is observed in both cases with the high purity > 99 %. In both these cases, only a co-current depressurization is used and the effluent during this step is sent to other beds in the cycle. Tail gas only issues during the countercurrent purge step. Table 7c shows the case for an RCPSA operated where some of the tail gas is also exhausted in a countercurrent depressurization step following a co-current depressurization. The effluent of the co-current depressurization is of sufficient purity and pressure to be able to return it one of the other beds in the RCPSA vessel configuration that is part of this invention. Tail gas i.e., exhaust gas, issues during the counter-current depressurization and the counter-current purge steps.

In all cases the entire amount of tail gas is available at elevated pressure which allows for integration with other high pressure refinery process. This removes the need for any form of required compression while producing high purity gas at high recoveries. In accordance with the broad claims of this invention, these cases are only to be considered as illustrative examples and not limiting either to the refinery, petrochemical or processing location or even to the nature of the particular molecules being separated.

**Tables 7a, 7b, and 7c**

**Example of RCPSA applied to a high pressure feed. Composition (mol %) of input and output from RCPSA (18 ft$^3$) (0.51m$^3$) in H2 purification. Feed is at 800 psig (55.20 barg), 122 deg F (50°C) and Feed rate is about 10.1 MMSCFD (3.31 standard m$^3$s$^{-1}$).**

**Table 7a**

**Step Times in seconds are $t_F$ = 0.91, $t_{CO}$ = 0.25, $t_{CN}$ = 0, $t_P$ = 0.33, $t_{RP}$ = 0.33**

[A] Tail gas at 65 psig (4.48 barg), H2 at 99.9% purity and 87% recovery

|  | FEED | PRODUCT | TAIL-GAS |
|---|---|---|---|
| H2 | 74.0 | 99.99 | 29.5 |
| C1 | 14.3 | 0.01 | 37.6 |
| C2 | 5.2 | 0.00 | 14.0 |
| C3 | 2.6 | 0.00 | 7.4 |
| C4+ | 3.9 | 0.00 | 10.9 |
| H20 | 20 vppm | 0 | 55 vppm |
| TOTAL (MMSCFD) | 10.187 | 6.524 | 3.663 |
| TOTAL (standard m$^3$s$^{-1}$) | 3.34 | 2.14 | 1.20 |
|  | 800 psig (55.20 barg) | 790 psig (54.50 barg) | 65 psig (4.48 barg) |

**Table 7b**

**Step Times in seconds are $t_F$ = 0.91, $t_{CO}$ = 0.25, $t_{CN}$ = 0, $t_P$ = 0.33, $t_{RP}$ = 0.33**

[B] Tail gas at 100 psig (6.90 barg), H2 at 99.93% purity and 80.3% recovery

|  | FEED | PRODUCT | TAIL-GAS |
|---|---|---|---|
| H2 | 74.0 | 99.93 | 38.1 |
| C1 | 14.3 | 0.07 | 32.8 |
| C2 | 5.2 | 0.00 | 12.5 |
| C3 | 2.6 | 0.00 | 6.5 |
| C4+ | 3.9 | 0.00 | 9.6 |
| H2S | 20 vppm | 0 vppm | 49 vppm |
| TOTAL (MMSCFD) | 10.187 | 6.062 | 4.125 |
| TOTAL (standard m$^3$s$^{-1}$) | 3.34 | 1.99 | 1.35 |
|  | 800 psig (55.20 barg) | 790 psig (54.50 barg) | 100 psig (6.90 barg) |

### Table 7c

**Step times in seconds are $t_F$ = 0.91, $t_{CO}$ = 0.083, $t_{CN}$ = 0.25, $t_P$ = 0.167, $t_{RP}$ = 0.41**

[C] Tail gas at 65-100 psig (4.48-6.90 barg), H2 at 99.8% purity and 84% recovery

|  | FEED | PRODUCT | TAIL-GAS |
|---|---|---|---|
| H2 | 74.0 | 99.95 | 28.9 |
| C1 | 14.3 | 0.05 | 39.0 |
| C2 | 5.2 | 0.00 | 13.7 |
| C3 | 2.6 | 0.00 | 7.2 |
| C4+ | 3.9 | 0.00 | 10.6 |
| H2S | 20 vppm | 0.01 vppm | 53 vppm |
| TOTAL (MMSCFD) | 10.187 | 6.373 | 3.814 |
| TOTAL (standard $m^3s^{-1}$) | 3.34 | 2.09 | 1.25 |
|  | 800 psig (55.20 barg) | 790 psig (54.50 barg) | 65-100 psig (4.48-6.90 barg) |

## Example 7

Tables 8a, 8b, and 8c compare the performance of RCPSA's operated in accordance with the invention being described here. The stream being purified has higher $H_2$ in the feed (85 % mol) and is a typical refinery/petrochemical stream. In these examples the purity increase in product is below 10 % (i.e. P/F < 1.1). Under this constraint, the method of the present invention is able to produce hydrogen at > 90% recovery without the need for tail gas compression.

### Tables 8a, 8b, and 8c

**Example of RCPSA applied to a Feed with H2 concentration (85 mol %). Composition (mol %) of input and output from RCPSA (6.1 ft$^3$) (0.17m$^3$). Feed is at 480 psig (33.10 barg), 135 deg F (57°C) and Feed rate is about 6 MMSCFD (1.97 standard $m^3s^{-1}$).**

### Table 8a

**Step Times in seconds are $t_F$ = 0.5, $t_{CO}$ = 0.33, $t_{CN}$ = 0.167, $t_P$ = 0.167, $t_{RP}$ =1.83 recovery = 85 %**

|  | FEED | PRODUCT | TAIL-GAS |
|---|---|---|---|
| H2 | 85.0 | 92.40 | 57.9 |
| C1 | 8.0 | 4.56 | 17.9 |
| C2 | 4.0 | 1.79 | 13.1 |
| C3 | 3.0 | 1.16 | 10.4 |
| C4+ | 0.0 | 0.00 | 0.0 |
| H2O | 2000 | 866.5 | 6915 |
| TOTAL (MMSCFD) | 6.100 | 4.780 | 1.320 |
| TOTAL (standard $m^3s^{-1}$) | 2.00 | 1.57 | 0.43 |
|  | 480 psig (33.10 barg) | 470 psig (32.40 barg) | 65 psig (4.48 barg) |

### Table 8b

**Step Times in sec. are $t_F$ =1, $t_{CO}$ = 0.333, $t_{CN}$ = 0.167, $t_P$ = 0.083, $t_{RP}$ = 0.417 recovery = 90 %**

|  | FEED | PRODUCT | TAIL-GAS |
|---|---|---|---|
| H2 | 85.0 | 90.90 | 58.2 |
| C1 | 8.0 | 5.47 | 18.1 |

(continued)

**Step Times in sec. are $t_F$ =1, $t_{CO}$ = 0.333, $t_{CN}$ = 0.167, $t_P$ = 0.083, $t_{RP}$ = 0.417 recovery = 90 %**

|  | FEED | PRODUCT | TAIL-GAS |
|---|---|---|---|
| C2 | 4.0 | 2.23 | 12.9 |
| C3 | 3.0 | 1.29 | 10.1 |
| C4+ | 0.0 | 0.00 | 0.0 |
| H2O | 2000 | 1070.5 | 6823 |
| TOTAL (MMSCFD) | 6.120 | 5.150 | 0.969 |
| TOTAL (standard $m^3s^{-1}$) | 2.01 | 1.69 | 0.32 |
|  | 480 psig (33.10 barg) | 470 psig (32.40 barg) | 65 psig (4.48 barg) |

**Table 8c**

**Step Times in sec. are $t_F$ =2, $t_{CO}$ =0.667, $t_{CN}$ =0.333, $t_P$ =0.167, $t_{RP}$ =0.833 recovery = 90 %**

|  | FEED | PRODUCT | TAIL-GAS |
|---|---|---|---|
| H2 | 85.0 | 90.19 | 55.2 |
| C1 | 8.0 | 6.21 | 18.8 |
| C2 | 4.0 | 2.32 | 13.9 |
| C3 | 3.0 | 1.17 | 11.3 |
| C4+ | 0.0 | 0.00 | 0.0 |
| H2O | 2000 | 1103.5 | 7447 |
| TOTAL (MMSCFD) | 6.138 | 5.208 | 0.93 |
| TOTAL (standard $m^3s^{-1}$) | 2.01 | 1.71 | 0.30 |
|  | 480 psig (33.10 barg) | 470 psig (32.40 barg) | 65 psig (4.48 barg) |

**Claims**

1. A process wherein the concentration of hydrogen is increased in a hydrogen-containing stream and the hydrogen is utilized in a petroleum refinery or petrochemical plant, which hydrogen-containing stream contains gaseous components other than hydrogen, which process comprises removing at least a portion of the gaseous components other than hydrogen from said hydrogen-containing stream in a rapid cycle pressure swing adsorption unit containing a plurality of adsorbent beds and having a total cycle time, $T_{TOT}$, of less than 10 seconds and a pressure drop within each adsorbent bed of greater than 4,086 kPa per metre of bed length (5 inches of water per foot of bed length), wherein the method also includes the step of utilizing said hydrogen in a petroleum refinery or petrochemical plant and the total cycle time, $T_{TOT}$, to separate the hydrogen-containing stream into a product gas and a tail gas is given by

$$t_{TOT} = t_f + t_{CO} + t_{CN} + t_P + t_{RP;}$$

where

$t_f$ = a time period for conducting the hydrogen-containing stream into an adsorbent bed which absorbs gaseous compounds other than hydrogen, and passing hydrogen out of the bed;
$t_{CO}$ = a co-current depressurization time;
$t_{CN}$ = a counter-current depressurization time;
tp = a purge time; and
$t_{RP}$ = a repressurization time

and where the tail gas pressure is greater than or equal to 515 kPa (60 psig) and wherein when the product purity to feed purity ratio P%/F% is greater than 1.1 the rate of recovery R% is greater than 80%, and when the product purity to feed purity ratio P%/F% is 1.1 or less the rate of recovery R% is greater than 90%, where P% is the purity of the hydrogen product gas in mol%, F% is the mol percentage of the feed gas which is hydrogen, and R% is the ratio of the amount of hydrogen retained in the product to the amount of hydrogen available in the feed.

2. The process of claim 1 wherein the pressure drop is greater than 8,172 kPa per metre of bed length (10 inches of water per foot of bed length).

3. The process of claim 2 wherein the total cycle time is less than 5 seconds.

4. The process of claim 3 wherein the pressure drop is greater than 16,344 kPa per metre of bed length (20 inches of water per foot of bed length).

5. The process of claim 1 wherein the hydrogen-containing stream is obtained from a hydrogen source that generates hydrogen by a chemical reaction and wherein light hydrocarbons are at least a portion of the gaseous components other than hydrogen.

6. The process of claim 5 wherein the hydrogen-containing stream is the product stream from steam reforming, catalytic cracking, partial oxidation and gasification of heavy hydrocarbons, thermal cracking or the net hydrogen stream from a catalytic reformer.

7. The process of claim 6 wherein the pressure drop is greater than 8,172 kPa per metre of bed length (10 inches of water per foot of bed length).

8. The process of claim 7 wherein the total cycle time is less than 5 seconds.

9. The process of claim 8 wherein the pressure drop is greater than 16,344 kPa per metre of bed length (20 inches of water per foot of bed length).

10. The process of claim 3 wherein the hydrogen-containing stream is the off gas stream from a fluid catalytic cracking unit.

11. The process of claim 10 wherein the pressure drop is greater than (10 inches of water per foot of bed length) 8,172 kPa per metre of bed length.

12. The process of claim 11 wherein the total cycle time is less than 5 seconds.

13. The process of claim 12 wherein the pressure drop is greater than 16,344 kPa per metre of bed length (20 inches of water per foot of bed length).

14. The process of claim 1 wherein the hydrogen-containing stream is obtained from a hydrogen source that recovers hydrogen from one or more hydrogen-containing streams.

15. The process of claim 14 wherein the hydrogen-containing stream is obtained from a cryogenic unit, a membrane unit, or a pressure swing adsorption unit.

16. The process of claim 15 wherein the pressure drop is greater than 8,172 kPa per metre of bed length (10 inches of water per foot of bed length).

17. The process of claim 16 wherein the total cycle time is less than 5 seconds.

18. The process of claim 17 wherein the pressure drop is greater than 16,344 kPa per metre of bed length (20 inches of water per foot of bed length).

19. A process as claimed in claim 1 which comprises the step of feeding said hydrogen-containing product gas to a hydroprocessing process unit as a reactant.

20. The process of claim 19 wherein the hydroprocessing process unit is selected from the group consisting of a hydrotreating unit for removing heteroatoms from a hydrocarbon feed, a hydrocracking process unit wherein a hydrocarbon feed is converted to lower boiling liquid products, and a hydroisomerization unit wherein molecules of a hydrocarbon feed are isomerized.

21. The process of claim 20 wherein the hydrocarbon feed is selected from the group consisting of naphtha boiling range feeds, kerosene and jet fuel boiling range feeds, distillate boiling range feeds, resides and crudes.

22. The process of claim 21 wherein the hydrocarbon feed is a naphtha boiling range feed selected from the group consisting of straight run naphtha, cat cracked naphtha, coker naphtha, hydrocracker naphtha, resid hydrotreater naphtha.

23. The process of claim 21 wherein the pressure drop is greater than 8,172 kPa per metre of bed length (10 inches of water per foot of bed length).

24. The process of claim 21 wherein the total cycle time is less than 5 seconds.

25. The process of claim 24 wherein the pressure drop is greater than 16,344 kPa per metre of bed length (20 inches of water per foot of bed length).

**Patentansprüche**

1. Verfahren, bei dem die Konzentration an Wasserstoff in einem Wasserstoff enthaltenden Strom erhöht wird und der Wasserstoff in einer Erdölraffinerie oder petrochemischen Fabrik verwendet wird, wobei der Wasserstoff enthaltende Strom neben Wasserstoff andere gasförmige Bestandteile enthält, bei welchem Verfahren zumindest ein Teil der von Wasserstoff verschiedenen gasförmigen Bestandteile aus dem Wasserstoff enthaltenden Strom in einer Anlage zur Druckwechsel-Adsorption mit schnellem Zyklus, die eine Vielzahl von Adsorbensbetten aufweist und die eine gesamte Zyklusdauer, $t_{TOT}$, von weniger als 10 Sekunden und einen Druckabfall innerhalb eines jeden Adsorbensbettes von größer als 4,086 kPa je m Bettlänge aufweist, entfernt wird, wobei das Verfahren ferner die Stufe einschließt, dass der Wasserstoff in einer Erdölraffinerie oder petrochemischen Fabrik verwendet wird und wobei die gesamte Zyklusdauer, $t_{TOT}$, zur Trennung des Wasserstoff enthaltenden Stroms in ein Produktgas und ein Restgas durch

$$t_{TOT} = t_f + t_{CO} + t_{CN} + t_P + t_{RP}$$

gegeben ist, in der

$t_f$ eine Zeitdauer für das Leiten des Wasserstoff enthaltenden Stroms in ein Adsorbensbett, das von Wasserstoff verschiedene gasförmige Bestandteile absorbiert, und für das Herausleiten des Wasserstoffs aus dem Bett;
$t_{CO}$ eine Zeit für den Druckabbau in Gleichstromrichtung,
$t_{CN}$ eine Zeit für Druckabbau in Gegenstromrichtung,
$t_P$ eine Spülzeit und
$t_{RP}$ eine Zeit zum erneuten Druckaufbau ist,

und wobei der Restgasdruck größer ist oder gleich 515 kPa und wobei das Verhältnis von Produktreinheit zu Einsatzmaterialreinheit P%/F% größer als 1,1 ist, die Rate der Gewinnung R% größer als 80% ist und, wenn das Verhältnis von Produktreinheit zu Einsatzmaterialreinheit P%/F% 1,1 oder kleiner ist, die Rate der Gewinnung R% größer als 90% ist, wobei P% die Reinheit des Wasserstoffproduktgases in mol% ist, F% der molare Prozentsatz an Einsatzmaterialgas ist, der aus Wasserstoff besteht und R% das Verhältnis der Menge an im Produkt verbliebenen Wasserstoff zu der Menge an im Einsatzmaterial verfügbaren Wasserstoff ist.

2. Verfahren nach Anspruch 1, bei dem der Druckabfall größer als 8,172 kPa je m Bettlänge beträgt.

3. Verfahren nach Anspruch 2, bei dem gesamte Zyklusdauer weniger als 5 Sekunden beträgt.

4. Verfahren nach Anspruch 3, bei dem der Druckabfall größer als 16,344 kPa je m Bettlänge beträgt.

5. Verfahren nach Anspruch 1, bei dem der Wasserstoff enthaltende Strom aus einer Wasserstoffquelle erhalten wird, die Wasserstoff durch eine chemische Reaktion erzeugt und wobei leichte Kohlenwasserstoffe mindestens einen Teil der von Wasserstoff verschiedenen gasförmigen Bestandteile ausmachen.

6. Verfahren nach Anspruch 5, bei dem der Wasserstoff enthaltende Strom der Produktstrom aus Dampfreformierung, katalytischem Cracken, teilweiser Oxidation und Vergasung von schweren Kohlenwasserstoffen, thermischem Cracken oder der Nettowasserstoffstrom aus einem katalytischen Reformer ist.

7. Verfahren nach Anspruch 6, bei dem der Druckabfall größer als 8,172 kPa je m Bettlänge beträgt.

8. Verfahren nach Anspruch 7, bei dem die gesamte Zyklusdauer weniger als 5 Sekunden beträgt.

9. Verfahren nach Anspruch 8, bei dem der Druckabfall größer als 16,344 kPa je m Bettlänge beträgt.

10. Verfahren nach Anspruch 3, bei dem der Wasserstoff enthaltende Strom der Abgasstrom aus einer Wirbelschichtcrackanlage ist.

11. Verfahren nach Anspruch 10, bei dem der Druckabfall größer als 8,17 kPa je m Bettlänge beträgt.

12. Verfahren nach Anspruch 11, bei dem die gesamte Zyklusdauer weniger als 5 Sekunden beträgt.

13. Verfahren nach Anspruch 12, bei dem der Druckabfall größer als 16,344 kPa je m Bettlänge beträgt.

14. Verfahren nach Anspruch 1, bei dem der Wasserstoff enthaltende Strom aus einer Wasserstoffquelle erhalten wird, die Wasserstoff aus einem oder mehreren Wasserstoff enthaltenden Strömen gewinnt.

15. Verfahren nach Anspruch 14, bei dem der Wasserstoff enthaltende Strom aus einer Cryoanlage, einer Membrananlage oder einer Druckwechsel-Adsorptionsanlage erhalten wird.

16. Verfahren nach Anspruch 15, bei dem der Druckabfall größer als 8,172 kPa je m Bettlänge ist.

17. Verfahren nach Anspruch 16, bei dem die gesamte Zyklusdauer weniger als 5 Sekunden beträgt.

18. Verfahren nach Anspruch 17, bei dem der Druckabfall größer als 16,344 kPa je m Bettlänge beträgt.

19. Verfahren nach Anspruch 1, das die Stufe umfasst, bei der das Wasserstoff enthaltende Produktgas als Reaktant einer Hydroprocessing-Verfahrensanlage zugeführt wird.

20. Verfahren nach Anspruch 19, bei dem die Hydroprocessing-Verfahrensanlage ausgewählt ist aus der Gruppe bestehend aus einer Hydrotreating-Anlage zur Entfernung von Heteroatomen aus einem Kohlenwasserstoffeinsatzmaterial, einer Hydrocracking-Verfahrensanlage, in der Kohlenwasserstoffeinsatzmaterial in niedriger siedende flüssige Produkte umgewandelt wird, und einer Hydromerisierungsanlage, in der Moleküle aus Kohlenwasserstoffeinsatzmaterial isomerisiert werden.

21. Verfahren nach Anspruch 20, bei dem das Kohlenwasserstoffeinsatzmaterial ausgewählt ist aus der Gruppe bestehend aus Einsatzmaterialien, die im Naphthabereich sieden, Einsatzmaterialien, die im Bereich von Kerosin und Jettreibstoff sieden, Einsatzmaterialien, die im Destillatbereich sieden, Rückständen und Rohmaterialien.

22. Verfahren nach Anspruch 21, bei dem das Kohlenwasserstoffeinsatzmaterial ein Einsatzmaterial ist, das im Naphthabereich siedet und das ausgewählt ist aus der Gruppe bestehend aus direkt destilliertem Naphtha, katalytisch gecracktem Naphtha, Kokernaphtha, hydrogecracktem Naphtha und Naphtha aus dem Rückstand von Hydrotreating.

23. Verfahren nach Anspruch 21, bei dem der Druckabfall größer als 8,172 kPa je m Bettlänge beträgt.

24. Verfahren nach Anspruch 21, bei dem die gesamte Zyklusdauer weniger als 5 Sekunden beträgt.

25. Verfahren nach Anspruch 24, bei dem der Druckabfall größer als 16,344 kPa je m Bettlänge beträgt.

**Revendications**

1. Procédé dans lequel la concentration d'hydrogène est accrue dans un courant contenant de l'hydrogène et l'hydrogène est employé dans une raffinerie de pétrole ou une usine pétrochimique, lequel courant contenant de l'hydrogène contient des constituants gazeux autres que l'hydrogène, lequel procédé comprend le fait d'éliminer au moins une partie des constituants gazeux autres que l'hydrogène dudit courant contenant de l'hydrogène dans une unité d'adsorption modulée en pression à cycle rapide contenant une pluralité de lits adsorbants et présentant un temps de cycle total, $t_{TOT}$, de moins de 10 secondes et une chute de pression au sein de chaque lit adsorbant de plus de 4,086 kPa par mètre de longueur de lit (5 pouces d'eau par pied de longueur de lit), dans lequel le procédé comporte aussi l'étape consistant à employer ledit hydrogène dans une raffinerie de pétrole ou une usine pétrochimique et le temps de cycle total, $t_{TOT}$, pour séparer le courant contenant de l'hydrogène en un gaz constituant le produit et un gaz de queue est exprimé par

$$t_{TOT} = t_f + t_{CO} + t_{CN} + t_P + t_{RP} \; ;$$

où $t_f$ = le laps de temps qu'il faut pour conduire le courant contenant de l'hydrogène dans un lit adsorbant qui absorbe les composés gazeux autres que l'hydrogène, et faire sortir l'hydrogène du lit ;
$t_{CO}$ = le temps de dépressurisation à co-courant ;
$t_{CN}$ = le temps de dépressurisation à contre-courant ;
$t_P$ = le temps de purge ; et
$t_{RP}$ = le temps de repressurisation
et où la pression du gaz de queue est supérieure ou égale à 515 kPa (60 psig),
et dans lequel lorsque le rapport entre la pureté du produit et la pureté de la charge P%/F% est supérieur à 1,1 le taux de récupération R% est supérieur à 80%, et lorsque le rapport entre la pureté du produit et la pureté de la charge P%/F% est de 1,1 ou moins, le taux de récupération R% est supérieur à 90%, où P% est la pureté du gaz hydrogène constituant le produit en % en moles, F% est le pourcentage molaire du gaz de la charge qui est de l'hydrogène, et R% est le rapport entre la quantité d'hydrogène retenue dans le produit et la quantité d'hydrogène disponible dans la charge.

2. Procédé selon la revendication 1 dans lequel la chute de pression est supérieure à 8,172 kPa par mètre de longueur de lit (10 pouces d'eau par pied de longueur de lit).

3. Procédé selon la revendication 2 dans lequel le temps de cycle total est inférieur à 5 secondes.

4. Procédé selon la revendication 3 dans lequel la chute de pression est supérieure à 16,344 kPa par mètre de longueur de lit (20 pouces d'eau par pied de longueur de lit).

5. Procédé selon la revendication 1 dans lequel le courant contenant de l'hydrogène est obtenu à partir d'une source d'hydrogène qui génère de l'hydrogène par une réaction chimique et dans lequel des hydrocarbures légers constituent au moins une partie des constituants gazeux autres que l'hydrogène.

6. Procédé selon la revendication 5 dans lequel le courant contenant de l'hydrogène est le courant de produit d'un reformage à la vapeur, d'un craquage catalytique, d'une oxydation partielle et d'une gazéification d'hydrocarbures lourds, d'un craquage thermique, ou le courant d'hydrogène net provenant d'une unité de reformage catalytique.

7. Procédé selon la revendication 6 dans lequel la chute de pression est supérieure à 8,172 kPa par mètre de longueur de lit (10 pouces d'eau par pied de longueur de lit).

8. Procédé selon la revendication 7 dans lequel le temps de cycle total est inférieur à 5 secondes.

9. Procédé selon la revendication 8 dans lequel la chute de pression est supérieure à 16,344 kPa par mètre de longueur de lit (20 pouces par pied de longueur de lit).

10. Procédé selon la revendication 3 dans lequel le courant contenant de l'hydrogène est le courant d'effluent gazeux provenant d'une unité de craquage catalytique fluide.

**11.** Procédé selon la revendication 10 dans lequel la chute de pression est supérieure à 8,172 kPa par mètre de longueur de lit (10 pouces d'eau par pied de longueur de lit).

**12.** Procédé selon la revendication 11 dans lequel le temps de cycle total est inférieur à 5 secondes.

**13.** Procédé selon la revendication 12 dans lequel la chute de pression est supérieure à 16,344 kPa par mètre de longueur de lit (20 pouces d'eau par pied de longueur de lit).

**14.** Procédé selon la revendication 1 dans lequel le courant contenant de l'hydrogène est obtenu à partir d'une source d'hydrogène qui récupère l'hydrogène à partir d'un ou plusieurs courants contenant de l'hydrogène.

**15.** Procédé selon la revendication 14 dans lequel le courant contenant de l'hydrogène est obtenu à partir d'une unité cryogénique, d'une unité à membrane, ou d'une unité d'adsorption modulée en pression.

**16.** Procédé selon la revendication 15 dans lequel la chute de pression est supérieure à 8,172 kPa par mètre de longueur de lit (10 pouces d'eau par pied de longueur de lit).

**17.** Procédé selon la revendication 16 dans lequel le temps de cycle total est inférieur à 5 secondes.

**18.** Procédé selon la revendication 17 dans lequel la chute de pression est supérieure à 16,344 kPa par mètre de longueur de lit (20 pouces d'eau par pied de longueur de lit).

**19.** Procédé selon la revendication 1 qui comprend l'étape consistant à charger ledit gaz constituant le produit contenant de l'hydrogène dans une unité d'hydroraffinage en tant que réactif.

**20.** Procédé selon la revendication 19 dans lequel l'unité d'hydroraffinage est choisie dans le groupe constitué par une unité d'hydrotraitement pour éliminer les hétéroatomes d'une charge d'hydrocarbure, une unité d'hydrocraquage dans laquelle une charge d'hydrocarbure est convertie en produits liquides de point d'ébullition plus bas, et une unité d'hydroisomérisation dans laquelle les molécules d'une charge d'hydrocarbure sont isomérisées.

**21.** Procédé selon la revendication 20 dans lequel la charge d'hydrocarbure est choisie dans le groupe constitué par les charges du domaine d'ébullition du naphta, les charges du domaine d'ébullition du kérosène et du carburéacteur, les charges du domaine d'ébullition du distillat, les résidus et les bruts.

**22.** Procédé selon la revendication 21 dans lequel la charge d'hydrocarbure est une charge du domaine d'ébullition du naphta choisie dans le groupe constitué par un naphta de distillation directe, un naphta craqué catalytiquement, un naphta d'unité de cokéfaction, un naphta d'hydrocraqueur, un naphta d'unité d'hydrotraitement de résidu.

**23.** Procédé selon la revendication 21 dans lequel la chute de pression est supérieure à 8,172 kPa par mètre de longueur de lit (10 pouces d'eau par pied de longueur de lit).

**24.** Procédé selon la revendication 21 dans lequel le temps de cycle total est inférieur à 5 secondes.

**25.** Procédé selon la revendication 24 dans lequel la chute de pression est supérieure à 16,344 kPa par mètre de longueur de lit (20 pouces d'eau par pied de longueur de lit).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6361583 B
- US 4719720 A
- US 4992401 A
- US 5368720 A
- US 3652231 A
- US 3856662 A
- US 4167473 A
- US 3992465 A
- US 4481103 A, F. J. Krambeck
- US 6607584 B, Moreau
- US 6406523 B
- US 6451095 B
- US 6488747 B
- US 6533846 B
- US 6565635 B

**Non-patent literature cited in the description**

- FW Hydrogen Production. **J. D. FLESHMAN.** Handbook of Petroleum Refining Processes. McGraw Hill, 2004
- **D. M. RUTHVEN ; S. FAROUQ ; K. S. KNAEBEL.** Pressure Swing Adsorption. VCH Publishers, 1994
- **D. M. RUTHVEN ; C. THAERON.** Performance of a Parallel Passage Absorbent Contactor. *Separation and Purification Technology,* 1997, vol. 12, 43-60